# EUROPEAN PATENT APPLICATION

(11) **EP 1 587 271 A1**
(43) Date of publication of application: **19.10.2005**
(21) Application number: 04009038.3
(22) Date of filing: 15.04.2004
(51) Int. Cl.: H04L 29/06

(54) **Method and arrangement for route optimisation in moving network to moving network communication**

(71) Applicant: SIEMENS AKTIENGESELLSCHAFT, 80333 München (DE)
(72) Inventor: Eisl, Jochen, 85748 Garching (DE); Mihailovic, Andrej, London NW6 4SP (GB)

(57) **Abstract**

Method and arrangement for route optimisation for the transport of data packets from a first portable node (PN1) attached to a first moving network (VN1) to a second portable node (PN2) attached to a second moving network (VN2), which provides for an efficient routing by signalling of reachability information comprising a route optimisation identifier to a route support agent and further towards the first moving network and routing of the data packets destined for the second portable node to the node addressed by the route optimisation identifier.

## Description

The invention relates to mechanisms for optimizing the route followed by IP packets generated by one mobile node (i.e. portable node - PN) situated in a moving network to another mobile node in another moving network.

Moving networks considered in this invention are either described by mobile nodes that independently move in a similar direction with similar speed or a group of nodes that travel as a single unit. The significant attributes that constitute such a moving network can be described by the common movement behaviour of the individual nodes within a reference system and the relative adjacency of the individual nodes throughout the considered time interval. A possible realization is a managed vehicular network (VN), where a network is located inside a vehicle and provides access to travelling customers, e.g. in a train. "Managed" in this context refers to the circumstance that network infrastructure in a public passenger transportation vehicle is owned and operated by administrative organizations that identify a value chain for offering electronic communication, information and entertainment services to its customers.

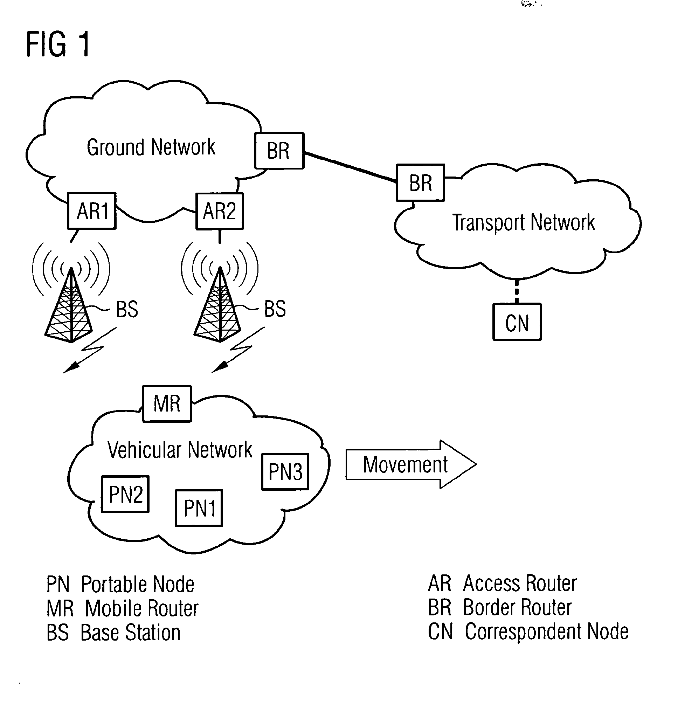

A possible network topology for such a network with connectivity to external network(s) (or "ground network", GN) is illustrated in Fig. 1. Several "portable nodes" (PNs) authenticate with the vehicular network. Portable nodes may want to get access through a vehicular network instead of having a direct connection with the ground network for reasons like coverage and capability enhancements, cost efficiency, rich network services etc. Moving network to moving network communication might occur between PNs or groups of PNs in the respective networks establishing flows among each other. A different case of this moving network to moving network communication pattern includes coverage extension for a requesting network, which has no direct connectivity (e.g. due to missing radio technology or lack of roaming agreement) or aims to extend the available connection capacity. If there is a direct radio link connection between the two moving networks one may forward the traffic (e. g. IP packets) on behalf of the other network.

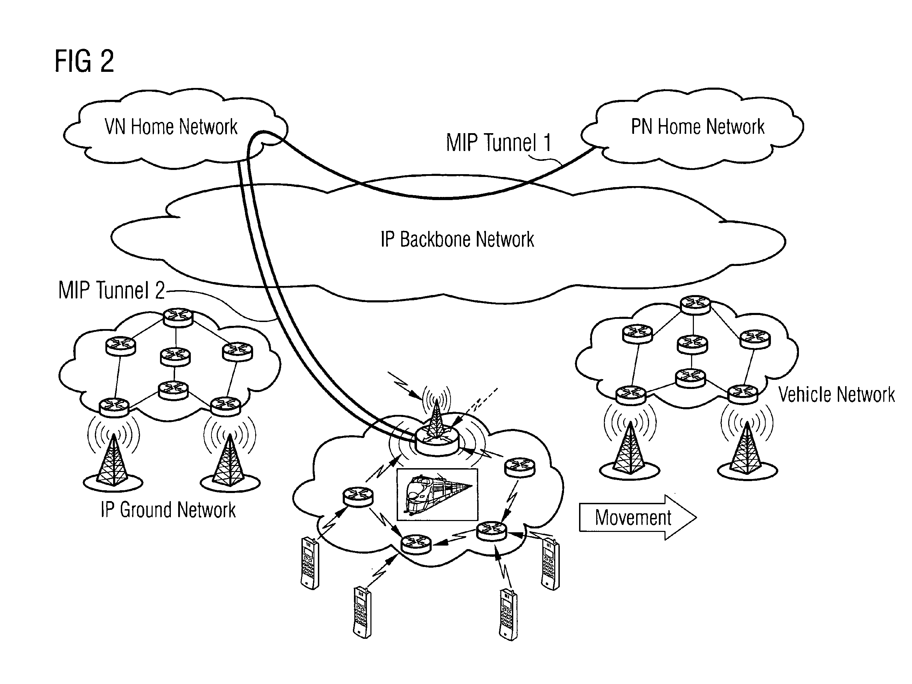

A mobile router, which represents the gateway node, maintains connectivity to the ground via one or more radio access networks. While the network is on move, the mobile router may have to re-establish connection with new candidate access routers and even new candidate access networks. Some of the portable nodes may establish communication with correspondent nodes outside the vehicular network and especially want to maintain continuous connectivity and reachability with a home network, i.e. a new connection from a correspondent node to a mobile node needs to be routed properly to the current location of the moving network. The IETF NEMO (network mobility) working group so far proposed mechanisms using a tunnel based approach to accommodate continuous connectivity and reachability in moving networks. This is illustrated in Fig. 2. In this example a vehicular network (VN) is illustrated, which is a special instantiation of a moving network. If the VN has a home network, then a protocol like Mobile IP (MIP) encapsulates packets between a home network and the current location of the moving network. If a portable node attaching to the moving network uses its own home network domain in addition then a further MIP tunnel is required, which results in encapsulation overhead due to additional tunnelling required.

The following definitions will be used:
MR: Mobile Router, the gateway device of the moving network that physically connects the moving network to the rest of the world, i.e. external networks like the Internet;
PN: Portable node, a node that is connected to the Internet through the mobile router. There may be many PNs associated with one MR;
CN: Correspondent Node, a node within the Internet that communicates with the PN;
CoA: Care-of-Address, an address allocated by a visited network to a node that joins it;
MIP: Mobile IP. This is a method of ensuring that mobile nodes remain reachable, by allowing them to associate a CoA with their well-known (e. g. DNS registered) home address. Basic MIP assumes that the network is fixed and only the end terminal moves;
GN: Ground Network - the network to which the MR directly physically connects;
VN: Vehicular Network is a special instantiation of a moving network like a train or plane network providing services to the passengers. In general the term VN is mostly used in the following although the more general term "moving network" applies;
HA: Home Agent - this term comes from Mobile IP based mobility management and describes a routing component that redirects messages to the current location of a mobile node.

The current invention is further related to moving network communication, where the traffic is sent to another moving network either for the purpose of reaching the destination which is connected to the other moving network or for the purpose of rerouting the traffic via the routing infrastructure of the other moving network. In the situation where the traffic destination is in the other moving network, a communication path between two different moving networks may be established. Regular VN to VN communication may occur, e.g. if different vehicles like tour coaches are travelling together for the same destination with a travelling group split among these vehicles. As well this communication pattern is envisioned for server resilience in vehicular networks. If a service is locally not available to passengers or the associated server temporarily fails, and there is no adequate service domain attached to the local ground network, PNs may connect to a server in a different moving network potentially nearby, which is managed by the same network operator.

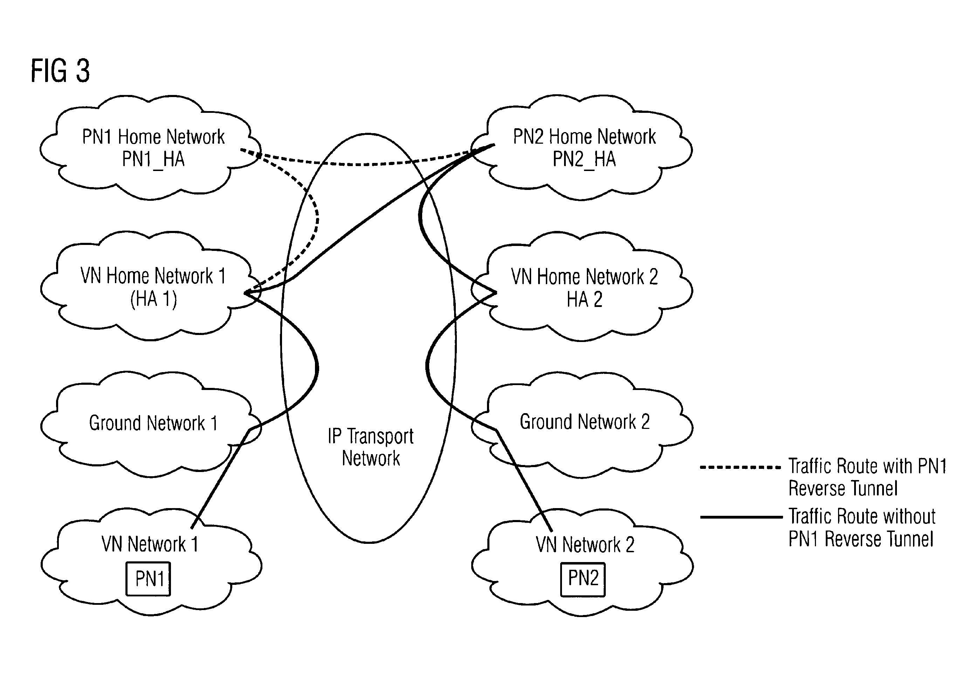

Following the NEMO approach to support VN-to-VN communication, packets would travel several routing hops along different home network domains, see Fig. 3. Packets generated by a portable node in a VN would first be forwarded to the Mobile Router, MR, of that VN, from there it will be tunnelled to the Home Agent (HA) of that MR. The HA will decapsulate the packets and forward them to the home network of the target mobile node in the other VN. From there packets are forwarded to the home network of the second VN, where the target mobile node is situated, from where they are captured and tunnelled to the target VN. Finally the packets are decapsulated from the MR and forwarded to their destination. The path followed by the packets can be even more complicated if Mobile IP Reverse Tunnel is used the source by the source mobile node towards its Home Agent. In this case another hop is added to the already long and complex route of the packet. The described routing inefficiencies as a consequence of the NEMO proposal are illustrated in Fig. 3 for the case when sending PNs uses Mobile IP Reverse Tunnel back to its Home Agent and when such action is not performed.

The problem of inefficient routing becomes highly significant for the moving network to moving network communication, if both networks are located far from their home network domains, but with relative adjacency to each other. For example, a traveller's group is split between two tour coaches travelling next to each other in Spain with regular communication, while the home network domains are located in Germany. The existing mobility solution based on tunnels between the current point of attachment and home network domains would inhibit a direct routing between the two vehicles in the above example. A solution for optimised communication between vehicular networks might be applicable also in a scenario, where a regional public bus transportation system requires frequent vehicle-to-vehicle communication. This could be ineffective, if onboard networks like possibly the vehicles themselves are controlled by different organization with different home network domains, some of them potentially located far away from the region of operation.

A further possible application for optimized routing is vehicle-to-vehicle communication through a direct link for the purpose of extension of network coverage and capacity. Network coverage for a vehicular network could be enhanced, if there is no or limited radio coverage on the ground. In this situation connection to a different vehicle may be the only possibility for external communication. Additionally a mobile router can provide spare capacity for another MR, if there are limited resources or if there is no appropriate technology within one mobile router to connect to an external network on its own. For example, if two vehicles are travelling in close distance and there is just satellite coverage in the landscape, the first vehicle might establish a direct link to the second vehicle through WLAN ad hoc mode to get access to the satellite network because it does not have a satellite equipment on its own.

The problem of inefficient routing, as described above particularly with respect to Fig. 3, has received limited attention so far, since the very mobility solution of VN is in the process of development. Specific mechanisms for VN-to-VN traffic path optimisation in the NEMO context are not available. Route optimisation is a feature introduced in Mobile IP (MIP)v6, however it is not suited for the moving network to moving network communication purpose. In the following the basic principles of MIPv6 route optimisation are explained. The general concept of moving network to moving network communication is not dependent on a specific version of the network protocol, but as a general remark MIPv4 does not inherently provide support for route optimisation as it requires an add-on protocol for achieving it.

There are two possible modes for communications between the mobile node and a correspondent node. The first mode, bi-directional tunneling, does not require Mobile IPv6 support from the correspondent node and is available even if the mobile node has not registered its current address binding with a correspondent node. Packets from the correspondent node are routed to the home agent and then tunneled to the mobile node. The second mode, "route optimisation", requires the mobile node to register its current address binding at the correspondent node. Packets from the correspondent node can be routed directly to the care-of address of the mobile node. When sending a packet to any IPv6 destination, the correspondent node checks its cached address bindings for an entry for the packet's destination address. If a cached binding for this destination address is found, the node uses a new type of IPv6 routing header to route the packet to the mobile node by way of the care-of address indicated in this binding.

Routing packets directly to the mobile node's care-of address allows the shortest communications path to be used. It also eliminates congestion at the mobile node's home agent and home link. In addition, the impact of any possible failure of the home agent or networks on the path to or from it is reduced. When routing packets directly to the mobile node, the correspondent node sets the destination address in the IPv6 header to the care-of address of the mobile node. A new type of IPv6 routing header is also added to the packet to carry the desired home address. Similarly, the mobile node sets the source address in the packet's IPv6 header to its current care-of address(es). For this purpose the mobile node adds a new IPv6 "Home Address" destination option. The inclusion of home addresses in these packets makes the use of the care-of address transparent above the network layer (e.g., at the transport layer).

Now it is explained why MIPv6 route optimisation without additional functionality is far from being an acceptable solution in the moving network to moving network communication situation:
- Restricted Scope: MIPv6 route optimisation applicability currently is limited to communication endpoints, i.e. PNs in the case of moving networks. In the moving network case however a PN may not be the most appropriate node to decide about the benefit of route optimisation;
- Interworking Deficiencies: MIPv6 support would be required in all entities, which participate in route optimisation, i.e. IPv4 nodes without the pre-installed transitional features would fail to take part in optimised routing. It is expected that full IPv6 migration (if ever possible) would take more than one decade;
- Terminal Complexity: The initiating node and the corresponding node would require additional complexity to support the specific IPv6 header types that need to be exchanged between the communicating parties. PNs attached to a moving network may not be prepared to perform such actions;
- Impacts on Addressing: MIPv6 route optimisation would require addressing solutions, that allows transparency of address change towards PNs in the case of moving network handover. However addressing solutions have been identified that hide network mobility events from PNs for several reasons. Examples are NAT (network address translation) based solution in a mobile router (MR) or the usage of addresses from a MR home network domain. In these situations PNs would not be able to recognize mobility events and hence could not initiate route optimisation signalling;
- Best Guess Routing: Communication endpoints like PNs don't have knowledge about topological constraints, e.g. imposed by tunnelling, or optimum timing and other topological and moving network positioning parameters to judge whether and when route optimisation is beneficial. With MIPv6 route optimisation can be imagined as a "best guess routing" mechanism without a mobile node actually knowing the gained advantage of alternate routing;
- Signalling Overhead: The initiation of binding update messages for the purpose of route optimisation may significantly reduce air link capacity, if there is a considerable number of PNs that may more or less concurrently send this information.

Thus, MIPv6 route optimisation is not suitable for peer to peer communication between moving networks and attached PNs are not perfectly suited to decide about alternate routes in this circumstance.

Therefore it is an object of the present invention to propose a method and an arrangement for optimizing the route followed by IP packets generated by a portable node situated in a moving network to another mobile node in another moving network, which overcomes the inefficient routing and resulting further drawbacks of the existing methods described.

This object is solved by a method according to claim 1 and an arrangement according to claim 15.

The method proposed by the invention provides general features needed for executing optimisation of traffic in a segment of the routing path between peer PNs both located in different VNs. The general features defined will then be applicable to any scenario for diversion of traffic for achieving the optimised route not only the case where the peer nodes are present in each VN. These scenarios are related to the exact location of the diversion point for optimisation of routes.

The inefficient routing of the prior art methods, caused when mobile nodes in different moving networks communicate with each other, can be overcome if some of the intermediate routers in the expected path between the moving networks are bypassed. For the purpose of route optimisation the exchange of routing information is required. For this purpose it is, according to the invention, proposed to introduce route support agents. There are one or more route support agents, which signal information about possible route optimisation between moving networks. One or more route support agents may be involved in the end-to-end optimised route between different vehicles.

In the following it is necessary to distinguish between different roles that a route support agent actually can take. These are explained subsequently:
- Outbound route support agent:
   This route support agent is located in relative adjacency to a moving network, which initiates traffic to a different moving network. An outbound route support agent controls, which outbound traffic may be re-directed for route optimisation. This route support agent may reside on-path or off-path of the MR's outbound traffic. Typical locations of the outbound route support agent are the access router of the local ground network, the MR of the VN from where the outbound traffic is generated or the MR's home network domain. An outbound route support agent may be co-located with the MR, if there is a direct radio connection between two vehicles either via a single hop or multiple hop forwarding. The outbound route support agent may or may not reside in the routing path. The outbound route support agent receives reachability information to trigger optimised routing to specific mobile nodes (i. e. PNs) in a destination VN.
- Inbound route support agent:
   This route support agent function is located in network nodes that propagate reach-ability for some or all mobile nodes attached to a VN, i.e. route optimisation is supported for an MR's inbound traffic from a different VN. Reach-ability information together with other attributes is possibly forwarded to other route support agents. When inbound traffic arrives at the route support agent it may have to perform decapsulation before it is forwarded to the MR. If both VNs involved into the communication are attached to the same access router, this access router may act as outbound route support agent for outbound traffic of one MR and inbound route support agent for inbound traffic of the second MR at the same time.

In more detail it is proposed a method for route optimisation for the transport of data packets from a first portable node attached to a first moving network to a second portable node attached to a second moving network, whereby a first mobile router acts as gateway for connecting the first mobile network to a first external network and a second mobile router acting as gateway for connecting the second mobile network to a second external network.

The first external network comprises at least the following routing nodes:
- a first access router for providing access to the first external network for the first moving network,
- a first home agent for the first moving network,
- a first home agent for the first portable node.
The second external network comprising at least the following routing nodes:
- a second access router for providing access to the second external network for the second moving network,
- a second home agent for the second moving network,
- a second home agent for the second portable node.
Both external networks being connected by a transport network for the transport of user data and signalling data.

The inventive method comprises the following steps:
- signalling of reachability information from the second mobile router or a node of the second external network to an inbound route support agent, the reachability information comprising the home address of the second portable node and a route optimisation identifier, such as an address or a qualified name, the route optimisation identifier being an address of the second mobile router or of a routing node of the second external network;
- transmitting of the reachability information from the inbound route support agent to an outbound route support agent;
- signalling of the reachability information from the outbound route support agent to the first mobile router or a particular routing node of the first external network and
- routing of the data packets destined for the second portable node from the first mobile router or the particular routing node of the first external network to the node addressed by the route optimisation identifier.

The inventive method for communication between VNs offers very important advantages, a few of them are:
- Reduced end-to-end delay:
   The solution optimises the path between the two VNs and as a result it reduces the end-to-end delay, which is a very important factor for real time applications. From the end user perspective there is a considerable reduction in forwarding delay between the original route compared to the optimised route.
- Minimisation of traffic congestion:
   It avoids traffic congestion to bypass bottlenecks at possibly critical points in the network, where traffic could converge from many sources, e.g. a mobile router's home network.
- Quality of Service (QoS) differentiation:
   From the VN operator point of view path selection can be used to enable QoS differentiation between different flows. For instance, due to limited resources, route optimisation could be used for premium customers only, whereas standard customer's traffic may be routed without special handling.
- Reduction of operational costs:
   Reduce operational costs by limiting traffic to local network regions ambient to the moving networks.
- Extension of network coverage:
   Network coverage for a vehicular network could be enhanced, e.g. vehicle-to-vehicle communication with a direct link could be more important where there is no or limited radio coverage on the ground. Additionally a MR router can provide spare capacity for another MR, if there are limited resources.

In embodiments of the invention, also an intermediate route support agent can be employed:

If route optimisation should be carried out for VNs that are currently attached to different ground networks, it may become necessary that an intermediate route support agent becomes involved in the signalling of reach-ability information between adjacent ground network domains. For that purpose an intermediate route support agent may restrict or condense signalling information before propagating it to a peer route support agent. The intermediate route support agent may or may not reside in the forwarding path of the optimised route. If this agent does not perform routing along the optimised route a next hop routing address should be propagated to the routing agent in upstream direction of the optimised path.

A conglomeration of different roles of a single route agent is possible, e.g. a route support agent can simultaneously fulfil the task of sending and receiving support agent.

Concerning the location of a route support agent as described in this invention the following two options are to be considered:
- Local route agent:
   In this case the route support agent is located within the VN, either co-located with the MR or deployed as a separate component. The local agent detects another moving network or MR respectively in its adjacency, which can be reached through a single hop or multiple hops along the radio link. For this purpose the MR has to support ad hoc mode operation for the considered radio link.
- External route agent:
   Here an agent is located external to the VN. One location of the outbound/inbound route support agent would be in relative proximity to the current location of the mobile router, for example the access router in the ground network. A route support agent can also be located in the home network domain of a mobile router, e.g. co-located with a home agent. Here the route support agent is placed in the common routing path for all packets that are addressed to a CN, which is external to the considered moving network. Candidate route agents a MR may want to utilise can be statically pre-configured, e.g. by some service level (roaming) agreement between the MR and the visited ground network. Another option for a MR is to discover a candidate route agent, when VN handover to a different ground network is performed. If the MR has no predefined knowledge about suitable route support agents in proximity, mechanisms have to be available to enable a MR to detect candidate route agents. A MR either may receive route agent advertisement messages or send solicitation messages to detect potential routing agents. Dynamic discovery comes with the expense of additional complexity in the MR for the following reason. The route support agent here may not be located in the standard routing path. Therefore the MR has to intercept packets and make a routing decision for standard or optimised routing. Usually a MR establishes a temporary session with a route support agent, based on the current location of the MR. From perspective of a secured network this is only possible, if MR has a security relationship with the route support agent.

Yet another level of differentiation for route support agents is whether they are involved in the route optimisation process or not. In the general case we assume 'off path' route agents, which exchange signalling information with other peer agents and control route optimisation but are not involved in the routing process. In contrast, if route support agents also perform routing they are referred to as 'on path' route agents. Any combination of route support agents can be envisioned in a route optimisation process, i.e. only 'on-path' route agents, 'off-path' route agents or a combination of it is possible.

In the following, potential network attributes are listed, which can be used by a route support agent to determine whether route optimisation towards the destination MR is possible:
- Comparison of Round Trip Times
- Geographic proximity of MRs
- Resource characteristics on candidate paths
- Hop count.

Some situations, which may cause a MR to resort to optimised routing are:
- Existence of a better path between VN1 and VN2. There are a variety of potential criteria that can be used for a route support agent to decide whether an alternate routing path might be more advantageous compared to a standard routing path.
- Static VN, thus routing does not change, hence if there is a benefit of the optimised route over the default one they are fixed;
- Traffic congestions in the segment of the non-optimised route;
- Permanently (taking into consideration lifetime of connections, VN speed...). Standard and embedded procedure e.g. VNs belong to same operator.

In principal there are two services that can be provided in the context of route optimisation:
Optimised routing support for outbound traffic:
   This service can be used by mobile nodes that are generating data destined for nodes in a nearby vehicle. Concerning route optimisation there are different policies that a MR can follow. In one case the MR always attempts to apply a better path for all traffic destined to an adjacent VN. There is no service registration for mobile nodes and mobile users may just benefit from a reduced forwarding delay to a peer node. Alternatively mobile nodes have a subscription with the VN operator, where the details of route optimisation are defined as part of a service level specification. Yet another approach is a dynamic service, with mobile nodes being dynamically registered and de-registered. This can happen implicitly, when a mobile node authenticates with the VN or explicitly, where the MR provides an interface towards the mobile node for dynamic registration and de-registration of the service. The service may be used as part of a transport service enabling the differentiation of packet forwarding treatment behaviour.
Reachability support for optimised routing on inbound traffic:
   This service enables mobile nodes to be reachable by other nodes in nearby VNs through an optimised route. Consequently a MR forwards current care-of address information to inbound route support agents. As for the optimised routing support, reach-ability support service can be provided in a different ways. In one case the MR provides reach-ability information for all attached mobile nodes. Alternatively mobile nodes have a subscription with the VN operator, where the details of route optimisation are defined as already described for the routing support service. Yet another approach is a dynamic service, with mobile nodes being dynamically registered and de-registered for optimised reach-ability. This can happen implicitly, when a mobile node authenticates with the VN or explicitly, where the MR provides an interface towards the mobile node for dynamic registration and de-registration of this service.

Further aspects and advantages of the invention will become clear from the further attached claims as well as a detailed description of exemplary embodiments, which will be described with respect to the attached figures, which show:
Fig. 1 (prior art, described above) an example topology for a vehicular network with connectivity to external networks;
Fig. 2 (prior art, described above) the approach for network mobility with double tunneling, following the IETF NEMO working group;
Fig. 3 (prior art, already described above) the routing based on the NEMO approach;
Fig. 4 scenario 1: tunnel between home agent and mobile router;
Fig. 5 scenario 2: tunnel between home agents;
Fig. 6 scenario 3: route optimisation with vehicular networks attached to the same access router;
Fig. 7 scenario 4: route optimisation with vehicular networks attached to the same ground network;
Fig. 8 scenario 5: route optimisation with vehicular networks attached to different ground networks;
Fig. 9 scenario 6: route optimisation with direct link between vehicles;
Fig. 10 scenario 7: route optimisation with reachability server support;
Fig. 11 example for a periodic exchange of binding information for route optimisation between route support agents;
Fig. 12 the functional components involved in the process of route optimisation;
Fig. 13 a further illustration of the functional components involved in the process of route optimisation;
Fig. 14 scenario 6, modification: Route optimisation for coverage and capability extension.

In the following, moving network to moving network communication supported with route optimisation is exemplified in various scenarios, whereby two vehicular networks (VNs) communicate with each other. Intermediate nodes in the communication focused in this invention are the MR in the first VN1, MR1, the home agent of VN1 (HA1), the home agent of the destination portable node (HA_PN), the home agent of the target VN2 (HA2), and finally the MR in the target VN2 (MR2) (if Mobile IP Reverse Tunnel is used source PN's HA can be added to this chain, see Fig. 3). However, some of those nodes can be bypassed if there are one or more agents, which know in advance the destination of the packets. Looking at the packet headers (including the encapsulated headers) there doesn't seem to be enough for any one of the nodes, on its own, to deduce that the call is going over two VNs. Therefore any mechanism to do a VN-VN route optimisation must rely on additional knowledge.

In the following, the different scenarios for the deployment of route support agents are described in detail. There are seven scenarios, which are explained subsequently. Different network topologies are described by scenarios 1 to 6 for 'on-path' route agents, whereas scenario 7 describes the deployment of 'off-path' route agents. This is done for the sake of simplifying the example. In principle, scenarios 1 to 6 could also include separate entities for route support agent and associated routing entity.

### Scenario 1: Tunnel between home agent and mobile router

The outbound route support agent is located in the MR home network domain, possibly co-located with a mobility home agent (HA1).

Co-location means either physical integration, i.e. the route support agent is integrated in the same physical device as the home agent, or both agents, implemented on separate units, are located physically nearby to each other, i.e. connected to and belonging to the same network domain or even the same LAN. The units might be typical processors, e.g. with access to a storage means.

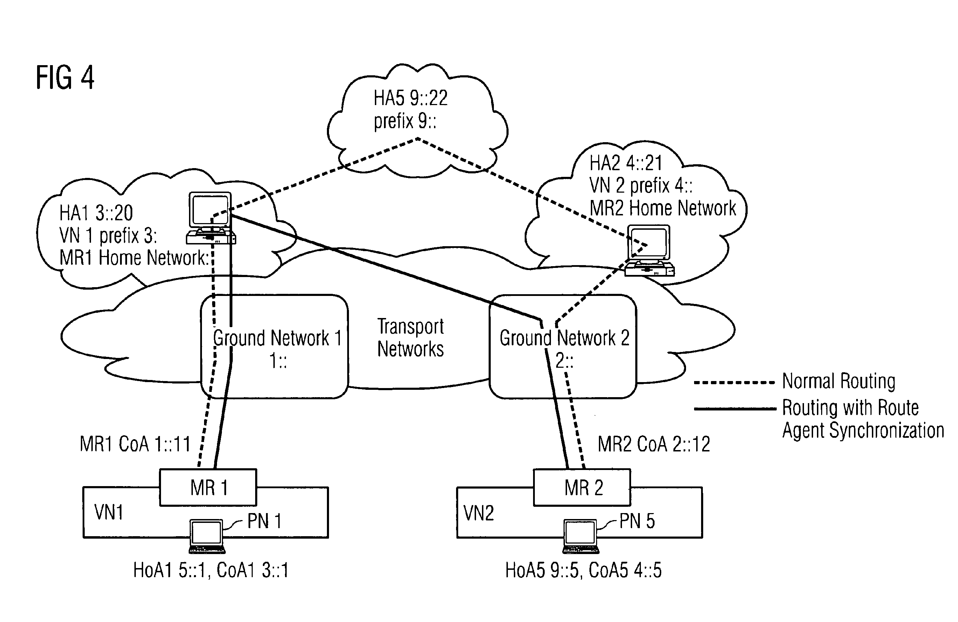

The node HA1 redirects traffic to MR of destination VN, i.e. outbound route support agent reroutes to destination MR (MR2). Scenario 1 is depicted in Fig. 4 where the home agent of the source mobile node and the home agent of the receiving mobile node (HA2) are bypassed by tunnelling the packets directly from HA1 to MR2. HA1 detects that the packets are destined for a mobile node situated in VN2 hence instead of sending the packets with conventional routing to the home network of that mobile node it routes it directly to the VN2.

### Scenario 2: Tunnel between home agents

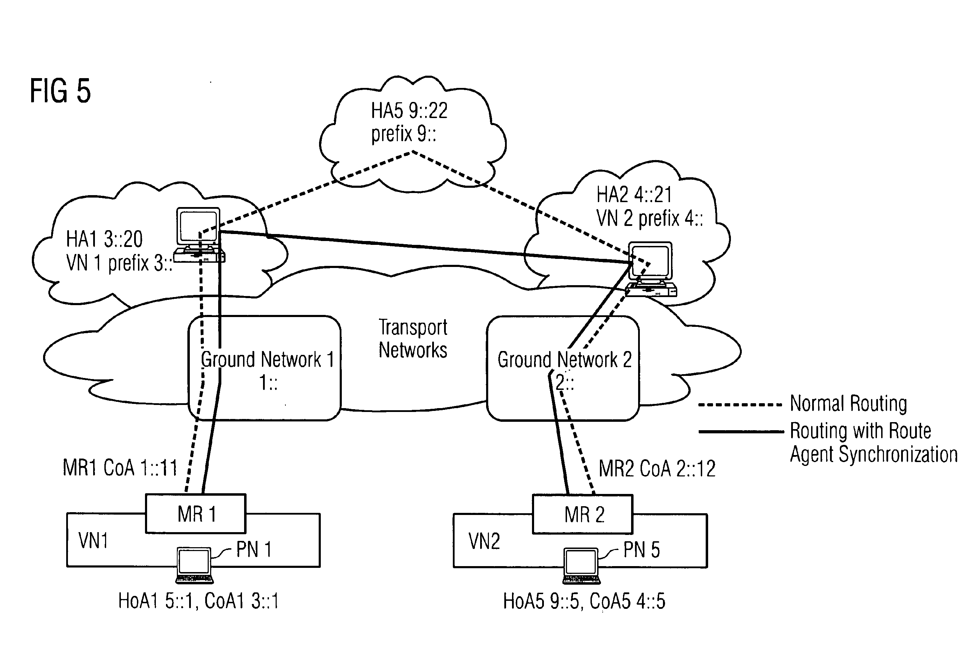

Though scenario 1 may support an enhanced route with even shorter delay, there is the potential problem of a missing security relation between HA1 and MR2 and the dynamic connectivity of MR which may change its point of attachment to the GN (thus its CoA). Therefore source VN's home agent (HA1) redirects traffic to destination VN's home agent (HA2), which sends the traffic to destination VN's MR (MR2). Scenario 2 is depicted in Fig. 5, where the mobile node's home agent is bypassed by tunnelling the packets from HA1 to HA2 from where they are forwarded to MR2. HA1 detects that the packets are destined for a mobile node situated in VN2 and instead of sending the packets with conventional routing to the home network of that mobile node it routes it to the HA2 first, which then relays it to MR2. The advantage of route optimisation here can be significant, if HA1 and HA2 are in relative vicinity to the current location of the vehicles, whereas the mobile node's home agent (HA5) is far away.

A mobile router needs to periodically update the reachability association in the inbound route support agent about the obtained Care-of-address in case of MR handover. Additionally the MR has to determine which PNs are currently attached to the correspondent VN and should be considered as potential destinations for optimised reach-ability support. There are different approaches how this can be arranged:
- MR can learn PNs' HoAs-to-CoAs mappings during the login (explicitly or during normal login processes such AAA)
- In case of a routing agent co-located with a home agent (scenario 1), this node can also discover PNs' HoAs-to-CoAs mappings by examining uplink/downlink packets coming from or being sent to the bi-directional tunnel. Mappings can be extracted by MR or its HA and communicated to each other

HA (i.e. HA1) can address the redirected packets to: PNs' HoAs where HA (i.e. HA1) only encapsulates them in packets addressed to HA2, which is the home agent of the destination node.

### Scenario 3: Route optimisation with vehicular networks attached to the same access router

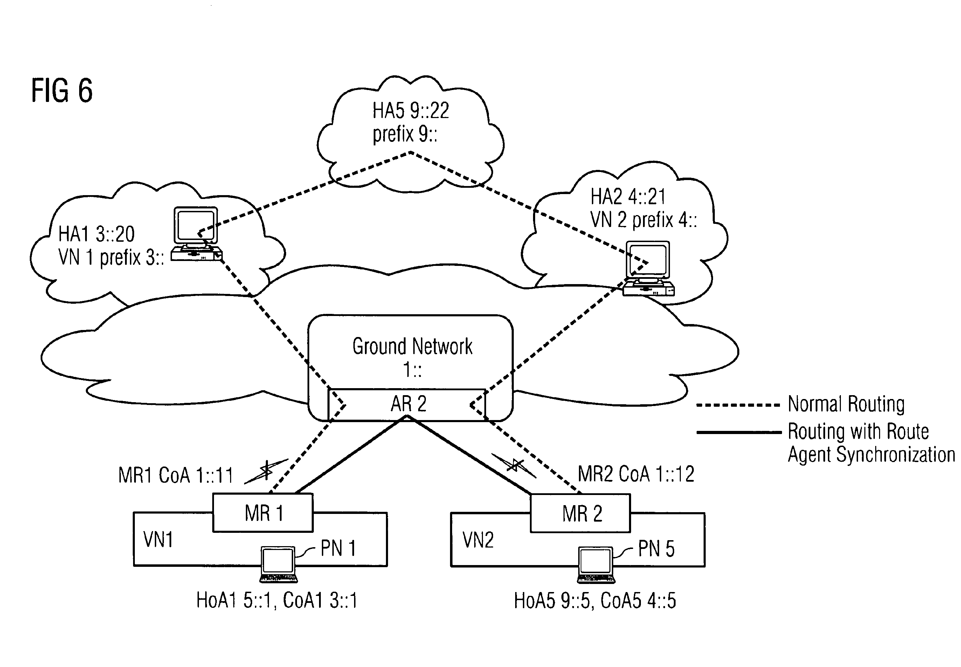

In this scenario two VNs attaching to the same ground access router (AR) have communication relationships. Outbound and inbound route support agents are implemented in AR, which would intercept packets from MR1 and send them directly to MR2. The route would bypass all home agents of the involved MRs (HA1, HA2) and home agents of the involved communicating parties (e.g. HA5). The advantage of route optimisation can significantly reduce the end-to-end delay, if the vehicles are located far away from their home network domains. Packet interception at the access router is more complicated, if packet encapsulation is in place between the sending MR and some other node in the network, possibly a home network domain of a mobile router. To enable appropriate routing decisions in this case for the MR, the routing information has to be visible in encapsulated packets. The scenario is illustrated in Fig. 6.

### Scenario 4: Route Optimisation with vehicular networks attached to the same ground network

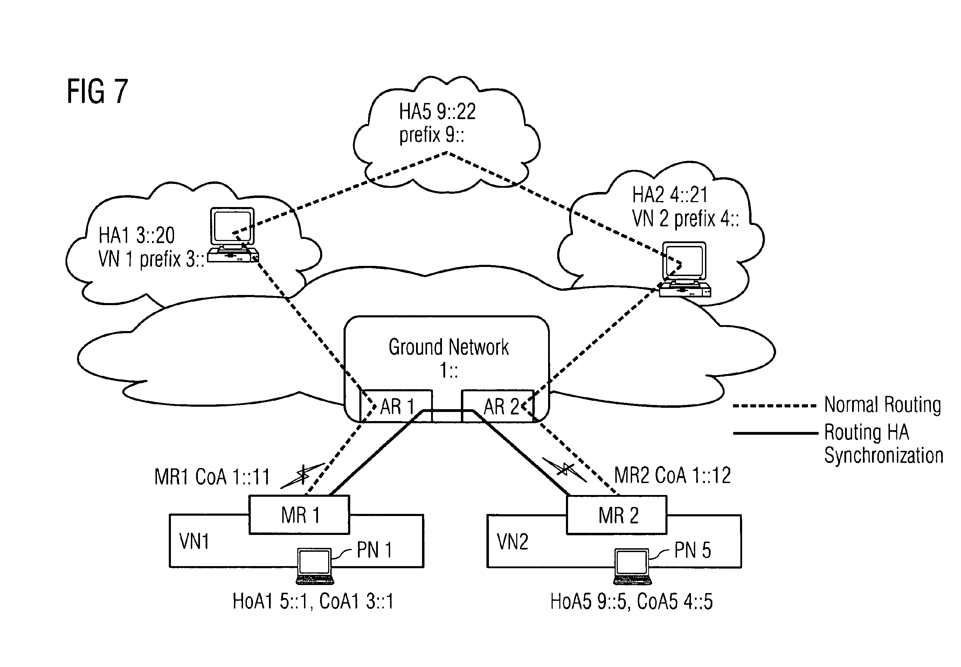

This scenario has similarities with scenario 3 in that rerouting can be restricted to the local ground network both VNs are currently attached to. Each access router (AR1, AR2) would take the role of a route support agent, with AR1 acting as outbound route support agent for the outbound traffic of MR1, which is destined to MR2. Consequently AR2 would act as inbound route support agent for inbound traffic sent to MR2, which has been generated within VN1. With the two route support agents co-operating for the purpose of route optimisation, AR2 would transmit reach-ability information about mobile nodes in VN2. The advantage of route optimisation can significantly reduce the end-to-end delay, if the vehicles are located far away from their home network domains. Packet interception at the access router is more complicated, if packet encapsulation is in place between a MR and some other node in the network, possibly a home network domain of a mobile router. To enable appropriate routing decisions in this case for the MR, the routing information has to be visible in encapsulated packets. The scenario is illustrated in Fig. 7.

### Scenario 5: Route Optimisation with vehicular networks attached to the different ground networks

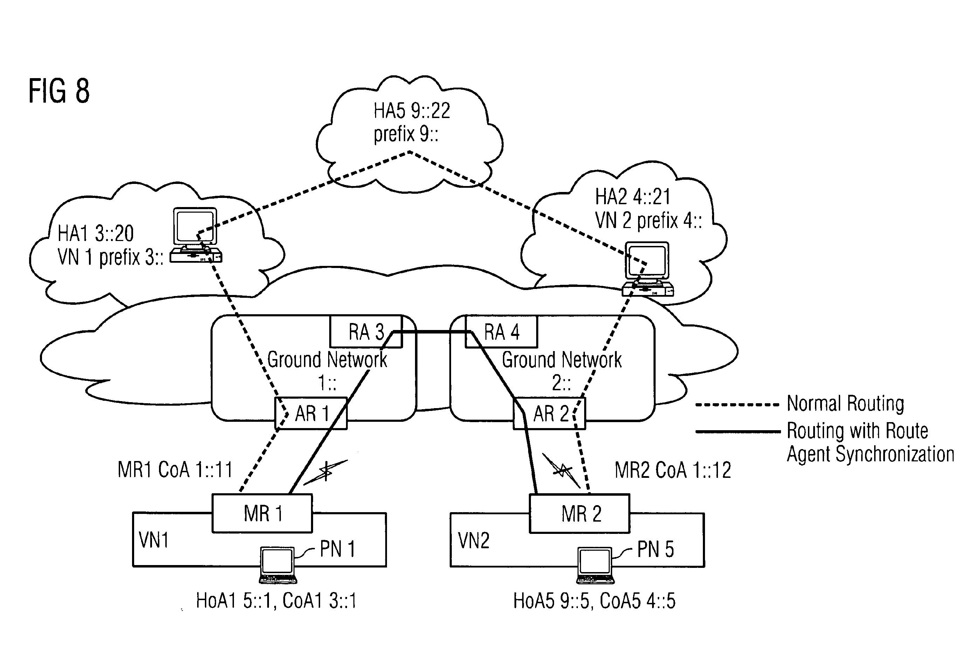

This scenario adds further complexity with the mobile routers (MR1, MR2) attaching to different, possibly geographically adjacent ground networks. Thus an optimised path would stretch at least between two different network domains. Optimisation in this situation might be questionable, but still the forwarding delay is significantly reduced compared with a default routing path. This might be true, if the resulting end-to-end path along the optimised route would only cross a limited number of domain gateways and resource attributes along this path enable forwarding with higher transport quality. Apart from outbound and inbound route support agents, possibly intermediate route support agents might be located in the forwarding path of the optimised, for example to exchange reach-ability information for optimised routing between different network domains. The example illustrated in Fig. 8 shows two intermediate route support agents (RA3 and RA4), which exchange this information between ground network boundaries, while outbound and inbound route support agent reside in the access routers (AR1 , AR2). Encapsulation mechanisms may be in place along the optimised route.

### Scenario 6: Route optimisation with direct link between vehicles

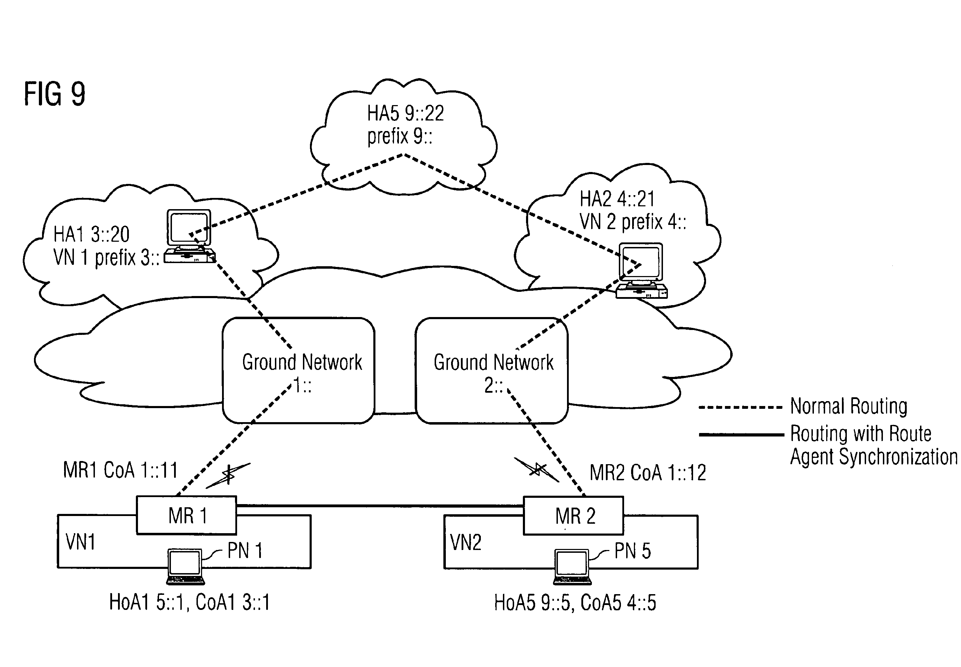

In this situation VN-to-VN communication can take place without the ground network. In one example there is a direct radio link between adjacent MRs. This scenario is illustrated in Fig. 9.

Outbound and inbound route support agents are located in the MRs of the communicating VNs. The ground network access is bypassed in this special situation. This scenario offers the highest level of route optimisation, since there is just one forwarding hop between the communicating networks. An additional advantage, which comes with the direct link communication is associated with the independence from any network infrastructure external to the VN, i.e. route optimisation is possible without support in the ground network, the home domain of a MR or any other serving domain in the fixed infrastructure. The establishment of a direct link between two MRs requires radio interfaces that can make use of an ad hoc mode operation instead of a centralized control, where one access point can serve many wireless stations.

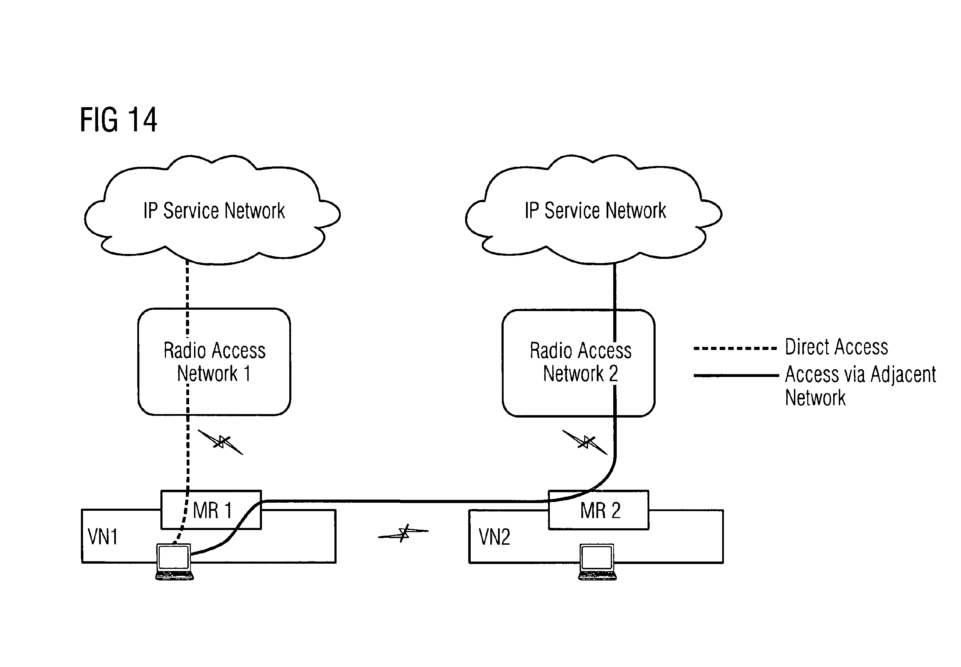

Apart from the direct link between communicating VNs there is also the possibility of multi-hop forwarding, where intermediate nodes functioning as wireless relays without the need for intermediate route support agents. The benefit of route optimisation can be significantly high, if both vehicles are located far away from their home network domains. In this situation route optimization would be applicable for any destination node, i.e. a secondary moving network is used to connect to any node outside the VN, which generates the traffic. This type of communication can be considered as capability and / or coverage extension of a moving network. This application is illustrated in Fig. 14. For example, two vehicles are travelling in close distance and there is a direct WLAN link between both of them. VN1 should have cellular access, whereas VN2 may use a connection to a satellite network. In the example described, there is just satellite coverage in the landscape, which VN2 may use to connect to a fixed external network, whereas VN1 has no direct link to a fixed network in the ground. Coverage extension is described by the fact, that VN1 forwards and possibly receives packets along VN2 to maintain external connection. Capability extension is described by the situation, where VN1 may use a direct link to the ground (e.g. a cellular network) and in addition uses spare capacity of an adjacent network to increase its capabilities based on multi-homing.

### Scenario 7: Route optimisation with off-path route agent(s)

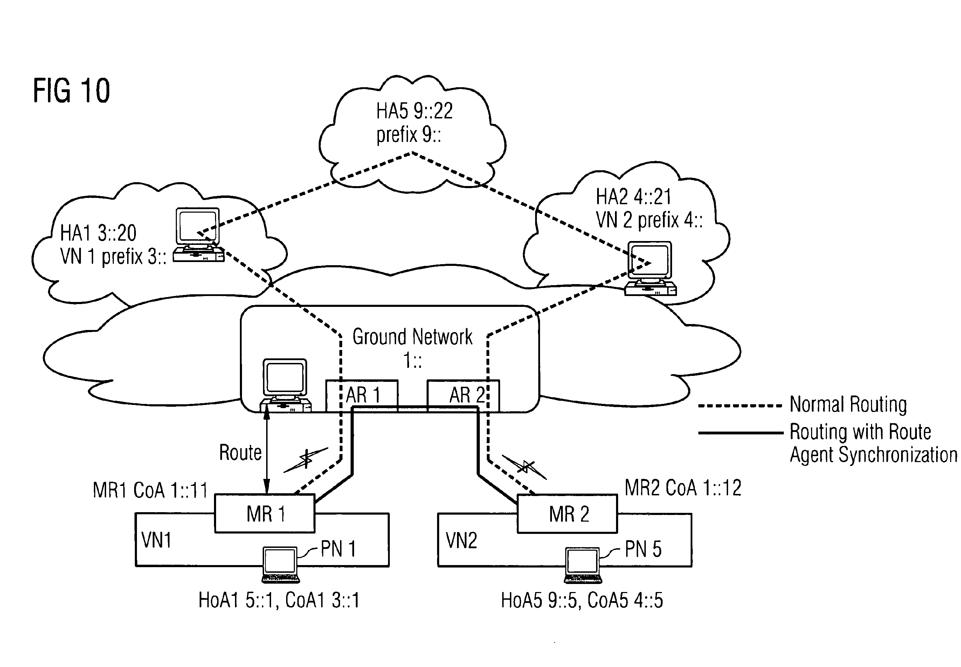

Scenarios 1 to 6 assume different cases for on-path route agents, i.e. route support agents, which do the signalling for route optimisation and also take care of the process of rerouting. In other words, these route support agents are also located in the forwarding path of the optimised route. An alternative is described in this scenario where one or more route support agents are not located in the path for optimised routing and just take care of signalling. This is a natural approach to separate signalling from routing functionality. There are different approaches concerning the deployment of off-path route agents. All route support agents involved in the route optimisation could be located off-path. Thus the actual nodes routing traffic between VNs may require specific routing entries to be provided by off-path routing agents. To one extreme there is only one off-path routing agent, which provides the address of the destination MR to the MR for the outbound traffic. Subsequently an MR can encapsulate outbound traffic for optimised routing directly to the peer MR. For this purpose the route support agent can provide a session key for secure exchange of data between the VNs. One off-path route agent may be sufficient, if the optimised route does not stretch along different network domains with the route support agent having complete information about route optimisation. Alternatively some route support agents may be located off-path and some on-path. However this does not change the principle that signalling and forwarding functions may reside on separate network nodes. The scenario is illustrated in Fig. 10. There is one off-path route agent, which retrieves reach-ability information and provides it to a requesting MR (MR1). When PN1 sends packets to PN5, MR1 intercepts them and forwards them directly to MR2 via the ground network infrastructure.

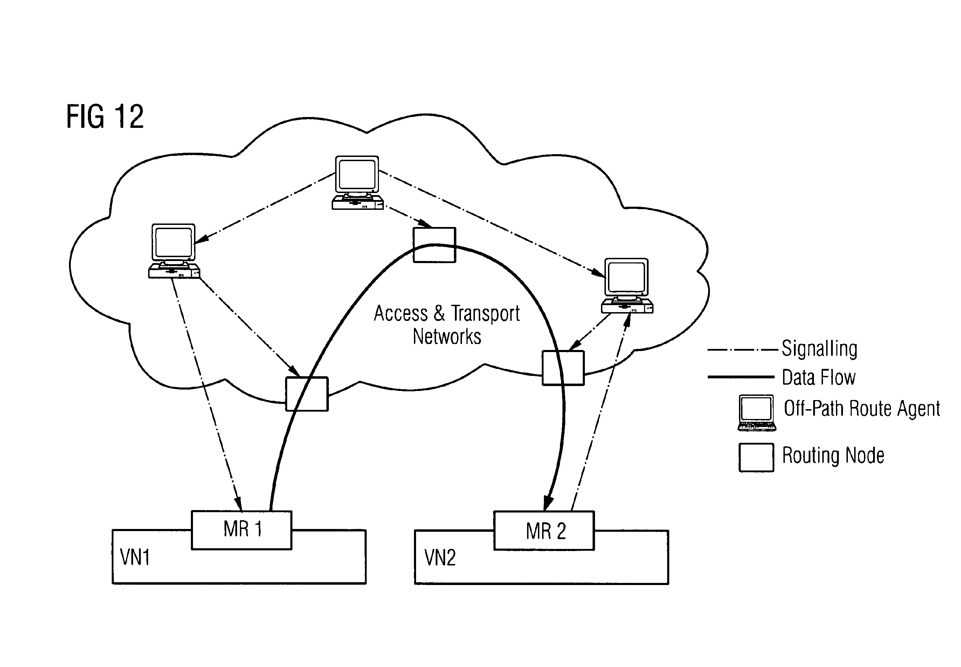

There are different characteristics that have to be considered with off-path route agents. In Fig. 12 an example is illustrated with three off-path route agents exchanging reach-ability information to achieve optimised routing. Potentially these nodes could interact with routing nodes, if routing information needs to be adapted. In addition to network layer address information, the off-path route agents could exchange naming information as in DNS systems, or application addressing information as for SIP servers.

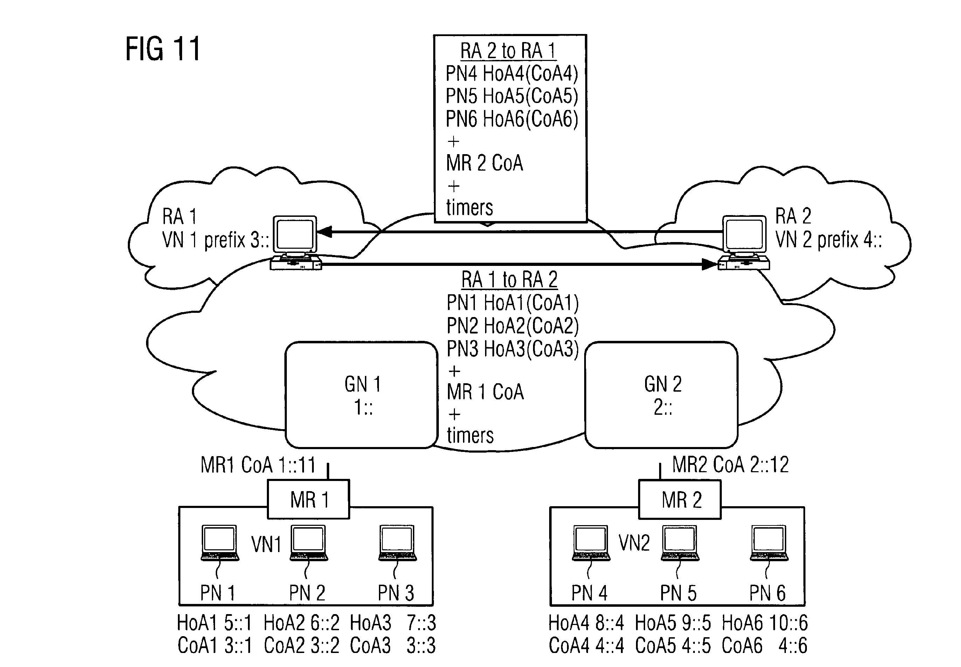

In the following the principle of information exchange for achieving optimised routes between VNs is explained. The control message flow illustrated in Fig. 11 shows two routing agents, which share reach-ability information. Further signalling as may be necessary for the deployment of intermediate route support agents (scenario 5) or with off-path route agent(s) (scenario 7) is not explained here. The first predisposition for realisation is the existence of information about PNs for which the rerouting is performed. The outbound route support agent, for example in Scenario 1 and Scenario 2 it is HA1, which needs to store the following information:
- PNs Home Addresses (HoAs),
- PNs Care-of-Addresses (CoAs) in VN2 (optional).

In addition, the outbound route support agent needs to store information for rerouting the traffic towards the destination PNs:
- Current Care-of-Address of MR connected to a GN (scenario 1 etc.),
- Address of HA2 (scenario 2)(as already indicated scenarios 1 and 2 can be correlated),

In addition timers may be needed for all the information kept in route support agents:
- Lifetimes for each PN in VN2 for which rerouting is required. Approximated or based on the lifetimes requested by them during the login to the VN2 (e.g. MIP lifetimes although this may not be accurate). The point is to prevent redirection of traffic to PNs that have left VN2 (could be handled by explicit leave messages or approximated based on their journey in VN and final destination).
- Lifetime for the MR's care-of-address (CoA) (applicable to scenario 1). This is not easy to approximate since it depends on MR mobility, which can be random and unpredictable. One solution is to have a refresh time for all PN entries based on the MR's CoA. Alternatively MR 2 can send reach-ability information to a route support agent when a new CoA is acquired.

The outbound route support agent, which performs or controls rerouting needs to discover for which PNs (mobile nodes) currently in the VN (i.e. VN1), it needs to perform the rerouting. Ways of realising these triggers are:
- PNs data can be predetermined. For example for some customers of the network operator.
- These data can be conveyed by the node from the other VN's infrastructure, HA or MR, i.e. the inbound route support agent. This node may detect other route support agents from the network prefix of the source address of the IP packet. This suggests that there must be a security association between the two VN in order to exchange these messages securely. This is proactive discovery.
- Another method is if the outbound route support agent requests confirmation of the connectivity of PNs by another route support agent (i.e. HA2 in Scenario 1 and Scenario 2). This is achievable by sending a request to another route support agent. This is reactive discovery.

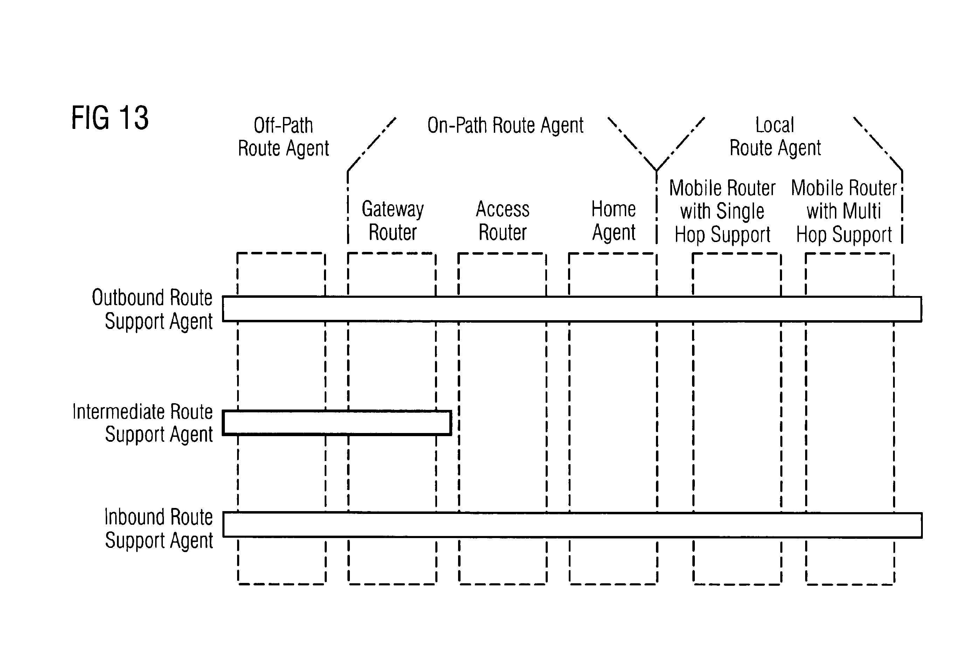

There are different characteristics that constitute a route support agent. Apart from basic functions there are specific modules that may be required for the different types of routing agents. Fig. 13 illustrates the possibilities, where the three different roles of routing agents are mapped to the route agent categories (local route agent, on-path route agent and off-path route agent). On-path route agents are typically co-located with network nodes that reside in the forwarding path of a MR's outbound traffic, like access router or MR home agent.

The invention further may include the following aspects:
- Facilitation of expedited communication between two parties in moving networks:
   Both communication parties are located in different moving networks, a moving network is described as a single physical or logical entity, that can move in an arbitrary direction with arbitrary speed over a certain period of time. Communication parties attach to a moving network and get access to external network services via one or more gateway routers. A route support agent, which is located in a forwarding path intercepts packets, analyses them, applies a routing decision and finally sends data towards the destination network, which is a moving network as well.
- Optimisation of routing by the route support agent:
   Dependent on the result of the packet analysing process, a route support agent can either apply a standard routing procedure or an optimised routing procedure. Standard routing procedure describes routing without the special knowledge that a packet is destined for a node within a different moving network, whereto a potentially optimised route exists. Optimised routing is described by a process, where a route support agent forwards packets to the destination network or another route support agent, which is either an intermediate router towards the destination network or which serves the destination network itself.
- A route support agent may be located inside a moving network as local route agent, particularly co-located with a mobile router or outside a moving network, particularly located in a default forwarding path. This is a routing node either located in the ground network, the moving network is currently connected with or anywhere in the forwarding path towards the moving network's home network domain, if reverse tunnelling is applied for moving network's outbound traffic.
- A route support agent, if it is located outside a moving network can act as an external server and serve several moving networks simultaneously. In contrast a route support agent co-located with a moving network individually serves the associated moving network.
- An external route agent can perform three different roles in the route optimisation process. A route support agent can act as outbound route support agent, inbound route support agent or intermediate route support agent. Outbound and inbound route support agents both are involved in every route optimisation process, whereas intermediate route support agent is an optional function.
- An external route agent can act as outbound / inbound route support agent and intermediate route support agent altogether, whereas a local route agent can just act as outbound or inbound route support agent.
- An outbound route support agent serves moving networks in that it attempts to provide optimised routing for some or all attached PNs on outbound traffic to specific destination moving networks. If optimisation is applied IP packets are routed directly to the mobile router of the destination network or to an inbound route support agent or as a third choice to an intermediate route support agent. If all three options are not possible for the outbound route support agent, default routing is applied.
- An inbound route support agent serves moving networks in that it provides reach-ability information about some or all attached PNs to outbound route support agents and/or intermediate route support agents. Thus route optimisation could be enabled for inbound traffic from specific moving networks.
- An intermediate route support agent serves other outbound/inbound route support agents and possibly intermediate route support agents in that it receives reachability information for route optimisation from an inbound route support agent or an intermediate route support agent and forwards it to another intermediate route support agent or an outbound route support agent. Additionally an intermediate route support agent can reduce signalling load by aggregating reach-ability information for the same destination.
- The optimised route by an external route agent can be coordinated for one or more moving networks serving the source parties with outbound route support agent function. At the same time an external route agent can optimise the route for several moving networks serving destinations parties with inbound route support agent function.
- Reactive discovery of destination parties for optimisation of routes:
   Route optimisation can be initiated on reactive means, i.e. the outbound route support agent currently serving the source network can query for an optimised route by generating explicit requests for destination parties in destination moving network. The lookup is performed from a list of adjacent route support agents, which act either as inbound route support agents or as intermediate route support agents. Intermediate route support agents can forward reactive requests further to other route support agents.
- Proactive discovery of destination parties for optimisation of routes:
   Route optimisation can be initiated on proactive means, i.e. the route support agent currently serving the destination network or the mobile router of the destination network can initiate the optimisation process by sending relevant information about destination parties to other route support agents, which can act either as outbound route support agents or intermediate route support agents. These route support agents can be identified from a list of adjacent nodes. Intermediate route support agents can forward route optimisation information to other route support agents.
- Route support agents establish sessions to candidate adjacent route support agents after successful mutual authentication and identification. Route support agents either use pre-configuration mechanisms or dynamic discovery to select candidate session peers.
- Route support agents, which have established a communication session periodically or on explicit request exchange information, for realising route optimisation between moving networks. The exchanged information include
- the current address of a mobile router,
- reachability information, described by the home address and the care of address of attached mobile nodes,
- timer values indicating lifetime of binding without explicit refresh,
- link attribute values characterizing resource metrics on the optimised path towards the destination network.
- A mechanism for selection and use of an external route agent by a mobile router:
   A mobile router either is served by a specific route support agent on pre-configuration basis or detects a suitable one. A mobile router discovers potential route support agents to connect with either by receiving broadcast advertisements or by explicit solicitation. A mobile router can be served by several route support agents simultaneously through different or the same radio interface.
- Dynamic lifetime for optimised route service:
   The optimised route service is time-dependent. There is a configured or negotiated time parameter for all or some of the address configurations in the route support agents. If the address information generated from an inbound route support agent is not refreshed within the configured or negotiated time interval, optimised reach-ability is deactivated for some or all mobile nodes served by the destination network. Refresh messages between route support agents can be exchanged selectively for specific mobile nodes or for all mobile nodes attached to a moving network.
- Selective optimisation of routes based on arbitrary criteria for selected parties:
   Support for route optimisation only for specific PNs, i.e. to achieve a specific QoS differentiation along an optimised path. Information exchanged between routing agents can include resource metrics for link or path specific attributes to describe the resource condition along the optimised path.
- Concerning route optimisation to other moving networks, a mobile router can offer service of optimised reach-ability and the service of optimised forwarding to attached mobile nodes by registering a mobile node for these services during the lifetime of attachment. Alternatively a PN can explicitly register and de-register for these services at any time it is attached to the mobile router.
- A mobile router can support local route optimisation. If there is a geographically adjacent moving network, which can be reached by the mobile router through a radio link using single- hop or multi-hop forwarding, the mobile router can employ a co-located route support agent to exchange reachability information through that radio link. The respective air interface of the involved moving networks has to support ad hoc mode operation.
- In addition or alternatively to the deployment of on-path route agents, where signalling and forwarding is done by the same node, route support agents may be located off-path, with signalling of reach-ability information and optimised forwarding carried out by different nodes. An off-path route agent can provide the next router hop or an explicit route consisting of multiple routing hops to a requestor for enabling route optimisation between moving networks. Route optimisation between moving networks can be based purely on on-path route agents, off-path route agents or a combination of it.
- In case the optimised path is achieved purely with the assistance of off-path route agents, these can collect naming and application related data in addition to the addressing information. In addition reach-ability information based on network addressing, naming and application related addressing can be exchanged with equivalent route support agents in adjacent network domain in the same manner like on-path route agents exchange information.
- Route optimisation is controllable by a single off-path route agent. The agent provides sufficient reach-ability information to enable the MR associated with outbound traffic to forward packets without assistance of further route support agents directly to the MR associated with inbound traffic. Off-path route agents can be co-located with a policy database, including network policies to achieve certain constraints for the route optimisation.
- Recursive messaging can occur, if several intermediate route support agents are involved in the route optimisation process. To limit the number of recursive calls a configuration parameter can be introduced to determine the maximum number of intermediate route support agents to be involved in the route optimisation process.
- Bi-directional route optimisation can be achieved by independently carrying out unidirectional route optimisation or by combining the process for both directions in the communication between different moving networks. The delivery of optimised routing information at an outbound route support agent could trigger this node to act itself as inbound route support agent and forward reach-ability information in the opposite direction.
- Implementation of a hash function in route support agents. With hash entries for a mobile router, representing the moving network or a single mobile node attached to it, the route lookup can be accelerated for optimised routes.
- Extension of Mobile IP (MIP) protocol to enable route optimisation for 'moving network - to moving network' communication. This is based on the modification of MIP route optimisation messages to enable a shortcut route for a group of mobile nodes characterised by an address prefix instead of a single address.
- Moving network to moving network communication is used to extend coverage and capability of a network in case there is a direct radio link between both networks. Coverage extension is enabled through routing along the adjacent moving network in case there is no direct coverage to directly forward packets to a fixed ground network. Capability enhancement is achieved by having the option of using both a direct connection to a ground network and an indirect connection through an adjacent moving network to enable multiple paths towards external destination networks and nodes.
- According to the aspect above, the moving network that is serving for the purpose of coverage and capability extension propagates reach-ability information on behalf of the moving network that is served.

In the following an exemplary high-level description is given for potential interfaces, where route support agents are involved. This is an abstract description of required functional methods and does not include parts of a design level specification to be used for a subsequent implementation.

### Interface towards MR:

- Register ()
   A MR registers at route support agent (RA) to be considered for route optimisation
   The MR either knows by some pre-configured methods appropriate RAs to connect with or it detects them by some means.
- RegisterClient ()
   A MR registers clients (PNs), which may benefit from route optimisation.
- UpdateClient ()
   This is associated with a refresh message to keep the binding information up-to-date before it is deleted potentially by a timer expiry within the RA. Alternatively a MR may register new CoA for connected clients.
- DeregisterClient ()
   A MR explicitly de-register one or more clients, i.e. these clients don't request route optimisation service anymore
- Deregister ()
   A MR deregisters itself for route optimisation, implicitly all PNs are de-registered as a consequence
- Query ()
   A MR would query for potential destination PNs that can be reached through an optimised route
- Notify ()
   The RA would provide route information for destination MRs that can be reached through an optimised route. These MRs are identified by CoAs (care-of-addresses) that are given by Ground networks. Alternatively the RA can provide naming or application specific addressing information how to reach the destination mobile node. The route support agent could use this mechanism also to revoke reach-ability information at the mobile router.
- AnnounceClient ()
   A MR announces PN addresses / temporary names based on DNS or SIP URIs that can be used to achieve route optimisation for nearby MRs
- RemoveClient ()
   A MR revokes PN addresses / temporary names based on DNS or SIP URIs previously announced to achieve route optimisation for nearby MRs. An event like PN detachment could cause this information to be sent towards the routing agent.

### Interface to Peer RA :

- Connect ()
   One agent would initiate a session with a peer agent
- Disconnect ()
   One agent would disconnect a session with a peer agent
- Confirm ()
   The agent that has been requested to accept a session from a peer agent would confirm the session and tell its configuration as part of the session parameters
- Announce ()
   Proactive discovery of a potential route, i.e. information about a route is announced by an inbound route support agent
- Update ()
   Update routing information, possibly required to handle mobility event or other events like modified session parameters, e.g. timer values for keeping active route optimisation for specific nodes.
- Query ()
   Route optimisation information is queried either for any destinations or for a specific one.

In the following a specific example is described how signalling would occur among the different nodes involved in the route optimisation process.

Two mobile nodes attached to different vehicles want to establish a multimedia session for bi-directional communication between them. The example is based on the illustration in Fig. 6. However, this figure does not completely show all the details associated with the described example. PN1 with home address 5::1 attaches to vehicular network VN1 with home address 3::20. PN2 with home address 9::5 attaches to vehicular network VN2 with home address 4::21. Both VNs currently attach to a ground network through the same access router. The access router includes route support agent functionality and can act both as outbound and inbound route support agent. Route optimisation is further explained in the following:
Step 1 - PN login procedure:
   PN1 attaches to moving network VN1 and performs a login procedure. PN1 obtains care-of-address CoA 3::1, which comes from VN1 home domain. PN2 performs the same procedure at VN2 and obtains CoA 4::5 from VN2 home domain. With the login both PNs are registered for route optimisation and for enhanced reach-ability support.
Step 2 - Route optimisation registration:
   MR1 and MR2 know by some means that AR1 is their outbound and inbound route support agent. PN1 and PN2 are registered for route optimisation, i.e. both MRs send a RegisterClient () message to AR1 for PN1 and PN2 respectively.
Step 3 - Reachability registration:
   As part of the reach-ability registration, PN's addresses are registered with the following information:
   PN home addresses (PN1 5::1 and PN2 9::5)
   PN CoAs (PN1 3::1 and PN2 4::5)
   MR CoAs (MR1 1::11 and MR2 1::14)
   Lifetime of the entries for PN (e.g. 2 minutes by default).
Step 4 - Proactive discovery:
   As AR1 is the current route support agent for MR1 and MR2 there is signalling required only to inform MR about reachable nodes in the adjacency, i.e. AR1 calls Notify () at MR1 to inform about PN2 addresses and MR2 address for encapsulation. In the same way AR1 informs MR2 about PN1 addresses and MR1 address to be used for encapsulation.
Step 5 - Communication initiation:
   PN1 initiates communication with PN2 based on the destination address. MR1 recognizes that it should not send packets for PN2 towards the home network domain, but instead send it to AR1. MR1 encapsulates the data for MR2.
Step 6 - Reverse communication:
   PN2 reacts on incoming session request and establishes a transport session in backward direction. The same way like described in step 5, MR2 sends packets destined for PN1 towards AR1, which concludes the bi-directional route optimisation process. Note that in this case bi-directional route optimisation is not synchronised i.e. is carried out independently for both directions.
Step 7 - VN handover:
   MR2 performs handover to different access router AR2, but still connects to the same ground network, i.e. can keep the allocated address. MR2 deregisters at AR1 for route optimisation and registers with AR2, which is the nearest available route support agent. This has been discovered by MR2 while attaching to the new access point. Now reachability information is registered at AR2 and the signalling procedure is equivalent to the mechanisms described in step 3. While handover is in progress MR1 recognizes that towards MR2 there is no optimised route in place. AR1 would send a notification message, that for PNs associated with VN2 there is no optimised route.
   In situations, where route optimisation is not available, the traffic will be routed according to the long tunnelled default route. Traffic may arrive out of order at the destination PN if the handover completes, the route is re-optimised, and the latest traffic reaches the PN before the older traffic routed via the longer default route. Re-ordering mechanisms may be in place at the destination PN or any other node that has sufficient knowledge to take care of the re-ordering.
Step 8 - Route re-establishment:
   AR2 now acting as the inbound and outbound route support agent for MR2 would exchange reach-ability information with AR1 by announcing MR2 address information and attached PN address information. Finally AR1 provides routing information to MR1, which enables MR1 to send packets destined for PN2 over the local access network and MR2's current point-of-attachment instead of encapsulating it towards the home network domain first.

The invention is not restricted to the above described specific aspects and embodiments but can also be carried out in numerous modifications and combinations thereof.

## Claims

1. Method for route optimisation
for the transport of data packets from a first portable node (PN1) attached to a first moving network (VN1) to a second portable node (PN2) attached to a second moving network (VN2), in a system comprising
a first mobile router (MR1) acting as gateway for connecting the first mobile network (VN1) to a first external network (GN1) and
a second mobile router (MR2) acting as gateway for connecting the second mobile network (VN2) to a second external network (GN2), wherein
the first external network (GN1, VN Home Network 1, PN1 Home Network 1) comprises the following routing nodes:
a first access router (AR1) for providing access to the first external network (GN1) for the first moving network (VN1),
a first home agent (HA1) for the first moving network (VN1),
a first home agent for the first portable node (PN1), and
wherein
the second external network (GN2, VN Home Network 2, PN2 Home Network) comprises the following routing nodes:
a second access router (AR2) for providing access to the second external network (GN2) for the second moving network (VN2),
a second home agent (HA2) for the second moving network (VN2),
a second home agent (HA5) for the second portable node (PN2), both external networks being connected by a transport network for the transport of user data and signalling data,
the method comprising the following steps:
- signalling of reachability information from the second mobile router (MR2) or a node of the second external network (HA2) to an inbound route support agent (RA2), the reachability information comprising the home address (PN2 HoA) of the second portable node (PN2) and a route optimisation identifier, such as an address or a qualified name, the route optimisation identifier being an identifier of the second mobile router (MR2) or of a routing node (HA2) of the second external network,
- transmitting of the reachability information from the inbound route support agent (RA2) to an outbound route support agent (RA1),
- signalling of the reachability information from the outbound route support agent (RA1) to the first mobile router (MR1) or a particular routing node (HA1) of the first external network, and
- routing of the data packets destined for the second portable node (PN2) from the first mobile router (MR1) or the particular routing node (HA1) of the first external network to the node addressed by the route optimisation identifier.

2. The method of claim 1,
**characterized in that**
the reachability information is transmitted from the inbound route support agent (RA2) via at least one intermediate route support agent to the outbound route support agent (RA1).

3. The method of claim 1 or 2,
**characterized in that**
the route optimisation identifier is the care-of-address (MR2 CoA)of the second mobile router (MR2).

4. The method of of claim 1 or 2,
**characterized in that**
the route optimisation identifier is the home address of the second mobile router (MR2).

5. The method of any one of the preceding claims,
**characterized in that**
the reachability information further comprises:
the care-of-address (PN2 CoA) of the second portable node (PN2) and/or
timer values indicating a lifetime for validity of the reachability information and/or
resource metrics for path specific attributes describing resource conditions along the optimised path and/or
naming data and/or
application related data.

6. The method of any one of the preceding claims,
**characterized in that**
in response to data packets received from the first portable node (PN1), the outbound route support agent (RA1) generates a request for the reachability information and sends the request towards the inbound route support agent (RA1).

7. The method of any one of claims 1 to 5,
**characterized in that**
the inbound route support agent (RA2) automatically transmits reachability information to the outbound route support agent (RA1) in response to the second portable node (PN2) being attached to the second moving network (VN2).

8. The method of any one of the preceding claims,
**characterized in that**
discovery of the inbound route support agent (RA2) by the second mobile router (MR2) is performed by receiving broadcast advertisements or by explicit solicitation.

9. The method of any one of the preceding claims,
**characterized in that**
transmitting of refresh messages from the inbound route support agent (RA2) to the outbound route support agent (RA1) and/or the intermediate route support agent, and
deactivation of reachability information in the outbound/intermediate route support agent after a predetermined time span in case no refresh message is received.

10. The method of any one of the preceding claims,
**characterized in that**
the first and/or second portable node register and de-register for the optimised routing service after attachment to the first/second moving network.

11. The method of any one of the preceding claims,
**characterized in that**
the first and second moving network are connected via a radio link, and the reachability information is transmitted via the radio link from the inbound to the outbound route support agent.

12. The method of claim 11,
**characterized in that**
the reachability information is propagated from the inbound route support agent (RA2) in the second moving network (VN2) via the radio link to the first moving network (VN1) and the first external network (GN1).

13. The method of any one of the preceding claims,
**characterized in that**
in response to the reception of the reachability information, the outbound route support agent (RA1) operates as a second inbound route support agent, sending a second reachability information to the inbound route support agent (RA2), which is thereby triggered to operate as a second outbound route support agent.

14. The method of any one of the preceding claims,
**characterized in that**
the address of the portable node in the reachability information is an address prefix related to a group of portable nodes.

15. Arrangement comprising an inbound route support agent (RA2) and an outbound route support agent (RA1) for use in the method of any one of the preceding claims,
wherein the inbound route support agent (RA2) is adapted to receive reachability information from a routing node (HA2, MR2) of a ground (VN Home Network 2) and/or moving network (VN2), whereby the reachability information comprises at least two network addresses,
and adapted to transmit the reachability information to the outbound route support agent (RA1) located in the same network as the inbound route support agent (RA2) or another network, and
the outbound route support agent (RA1) is adapted to receive reachability information from the inbound route support agent (RA2), and adapted to signal the reachability information to routing nodes (HA1, MR1) located in the same network as the outbound route support agent unit or another network.

16. The arrangement of claim 15,
further comprising an intermediate route support agent located in the same network as the inbound route support agent (RA2) or another network, wherein
the inbound route support agent is adapted to transmit the reachability information to the intermediate route support agent,
the intermediate route support agent is adapted to receive reachability information from the inbound route support agent (RA2) and adapted to aggregate and to transmit the reachability information to the outbound route support agent (RA1) located in the same network as the intermediate route support agent or another network and
the outbound route support agent (RA1) is adapted to receive reachability information from the intermediate route support agent.

17. The arrangement of claim 15 or 16,
wherein the inbound and/or the outbound route support agent is/are adapted for at least two moving networks.

18. The arrangement of any one of claims 15 to 17,
whereby the inbound route support agent (RA2) is co-located with a mobile router (MR2).

19. The arrangement of any one of claims 15 to 18,
whereby the outbound route support agent (RA1) is co-located with a mobile router (MR1).

20. The arrangement of any one of claims 15 to 17,
whereby the inbound route support agent (RA2) is co-located with a home agent of a moving network (HA2).

21. The arrangement of any one of claims 15 to 17,
whereby the outbound route support agent (RA1) is co-located with a home agent of a moving network (HA1).
